# EUROPÄISCHE PATENTSCHRIFT

(11) **EP 2 304 741 B1**
(45) Veröffentlichungstag und Bekanntmachung des Hinweises auf die Patenterteilung: **12.10.2011**
(21) Anmeldenummer: 09780751.5
(22) Anmeldetag: 17.07.2009
(51) Int. Cl.: H01F 7/08

(54) **VERFAHREN ZUR HERSTELLUNG EINES METALLISCHEN VERBUNDBAUTEILS, INSBESONDERE FÜR EIN ELEKTROMAGNETISCHES VENTIL**
METHOD FOR PRODUCING A METAL COMPOSITE COMPONENT, IN PARTICULAR FOR AN ELECTROMAGNETIC VALVE
PROCÉDÉ DE FABRICATION D'UN ÉLÉMENT COMPOSITE MÉTALLIQUE, EN PARTICULIER POUR UNE VANNE ÉLECTROMAGNÉTIQUE

(30) Priorität: 18.07.2008 DE 102008040549
(43) Veröffentlichungstag der Anmeldung: 06.04.2011
(73) Patentinhaber: Robert Bosch GmbH, 70442 Stuttgart (DE)
(72) Erfinder: SEITTER, Max, 75417 Muehlacker (DE); OETINGER, Stefan, 96052 Bamberg (DE)
(86) Internationale Anmeldenummer: PCT/EP2009/059203
(87) Internationale Veröffentlichungsnummer: WO 2010/007151

(56) Entgegenhaltungen:
- EP-A- 1 061 140
- EP-A- 1 450 380
- DE-A1- 2 317 983
- DE-A1- 4 237 405
- GB-A- 2 262 659
- JP-A- 6 074 124

## Beschreibung

### Stand der Technik

Die Erfindung geht aus von einem Verfahren zur Herstellung eines metallischen Verbundbauteils, insbesondere für ein elektromagnetisches Ventil nach der Gattung des Hauptanspruchs.

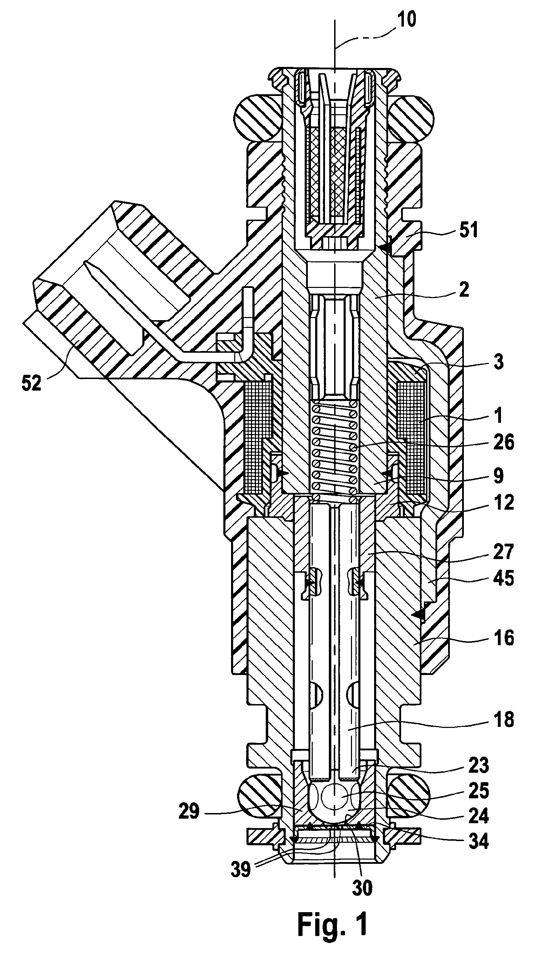

In der Figur 1 ist ein bekanntes Brennstoffeinspritzventil aus dem Stand der Technik dargestellt, das einen klassischen dreiteiligen Aufbau eines inneren metallenen Strömungsführungsteils und zugleich Gehäusebauteils besitzt. Dieses innere Ventilrohr wird aus einem einen Innenpol bildenden Einlassstutzen, einem nichtmagnetischen Zwischenteil und einem einen Ventilsitz aufnehmenden Ventilsitzträger gebildet und in der Beschreibung zu Figur 1 näher erläutert.

Aus der DE 35 02 287 A1 ist bereits ein Verfahren zur Herstellung eines hohlzylindrischen metallenen Gehäuses mit zwei magnetisierbaren Gehäuseteilen und einer dazwischen liegenden, die Gehäuseteile magnetisch trennenden, amagnetischen Gehäusezone bekannt. Dieses metallene Gehäuse wird dabei aus einem magnetisierbaren Rohling einstückig bis auf ein Übermaß im Außendurchmesser vorbearbeitet, wobei in der Innenwand des Gehäuses in der Breite der gewünschten mittleren Gehäusezone eine Ringnut eingestochen wird. Bei rotierendem Gehäuse wird ein nichtmagnetisierbares Füllmaterial in die Ringnut unter Erwärmung des Ringnutbere<ichs gefüllt und die Rotation des Gehäuses bis zur Erstarrung des Füllmaterials aufrechterhalten. Anschließend wird das Gehäuse außen bis auf das Endmaß des Außendurchmessers überdreht, so dass keine Verbindung mehr zwischen den magnetisierbaren Gehäuseteilen besteht. Ein derart hergestelltes Ventilgehäuse kann z.B. in Magnetventilen für Antiblockiersysteme (ABS) von Kraftfahrzeugen zum Einsatz kommen.

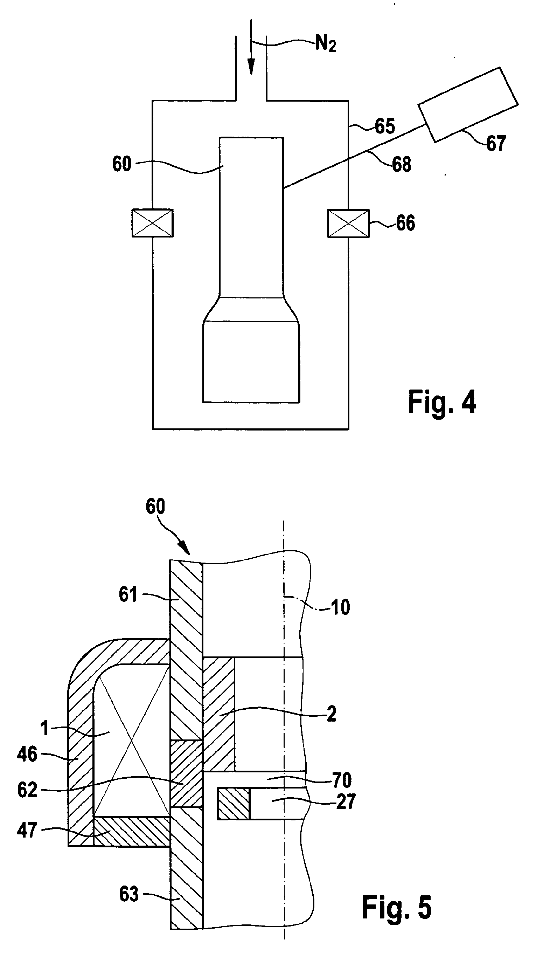

Bekannt sind des Weiteren aus der DE 42 37 405 C2 Verfahren zur Herstellung eines festen Kerns für Einspritzventile für Brennkraftmaschinen (Figur 5 des Dokuments). Die Verfahren zeichnen sich dadurch aus, dass unmittelbar oder über vorherige Umwandlungsprozesse ein einteiliges hülsenförmiges, magnetisches, martensitisches Werkstück bereitgestellt wird, das eine örtliche Wärmebehandlung in einem mittleren Abschnitt des magnetischen, martensitischen Werkstücks zur Umwandlung dieses mittleren Abschnitts in einen nichtmagnetischen, austenitischen mittleren Abschnitt erfährt. Alternativ werden bei der örtlichen Wärmebehandlung mittels Laser geschmolzenes Austenit bzw. geschmolzenes Ferrit bildende Elemente an den Ort der Wärmebehandlung zur Bildung eines nichtmagnetischen, austenitischen mittleren Abschnitts des festen Kerns hinzugefügt.

### Vorteile der Erfindung

Das erfindungsgemäße Verfahren zur Herstellung eines metallischen Verbundbauteils mit den kennzeichnenden Merkmalen des Hauptanspruchs hat den Vorteil, dass auf besonders einfache und kostengünstige Art und Weise eine magnetische Trennung an einem einstückigen, z.B. hülsenförmigen Verbundbauteil mit eng begrenzten Übergangsbereichen realisierbar ist, das großserientechnisch zuverlässig herstellbar ist. Das erfindungsgemäß hergestellte Verbundbauteil zeichnet sich dadurch aus, dass wenigstens zwei benachbarte Abschnitte unterschiedlicher Magnetisierung vorliegen, wobei die durch den zweiten Abschnitt mit gegenüber den ersten Abschnitten reduzierter Sättigungspolarisation Jₛ gebildete magnetische Drossel im Verbundbauteil in vorteilhafter Weise unmagnetisch oder teilmagnetisch in einer Größenordnung ist, die ideal den Einsatz eines solchen Verbundbauteils in einem elektromagnetischen Ventil erlaubt.

Besonders vorteilhaft ist es erfindungsgemäß, als Ausgangsmaterial einen semi-austenitischen nichtrostenden Stahl (z.B. 17-7PH, 15-8PH) in Form eines Rohteils für das spätere Verbundbauteil zu verwenden. Diese Materialien sind grundsätzlich schwer verformbar bzw. tiefziehbar, weil sie zur Bildung von Umformmartensit und zur Kaltverfestigung neigen. Diesen dem Material innewohnenden Mechanismen kann durch die erfindungsgemäß eingesetzte Temperaturunterstützung entgegengewirkt werden, so dass sich letztlich benachbarte Abschnitte unterschiedlicher Sättigungspolarisation an einem Verbundbauteil zuverlässig darstellen lassen.

Von Vorteil ist es zudem, dass eine hohe Flexibilität in der Ausgestaltung der Geometrie des Verbundbauteils selbst, wie z.B. bei Länge, Außendurchmesser, Abstufungen ermöglicht ist.

Durch die in den Unteransprüchen aufgeführten Maßnahmen sind vorteilhafte Weiterbildungen und Verbesserungen des im Hauptanspruch angegebenen Verfahrens möglich.

Von Vorteil ist es, auf diese Weise Verbundbauteile herzustellen, die aus mindestens einem magnetischen Abschnitt und mindestens einem unmagnetischen Abschnitt oder aus mindestens einem magnetischen Abschnitt und mindestens einem Abschnitt mit teilweise reduzierter Sättigungspolarisation zusammengesetzt sind.

Besonders vorteilhaft ist es, den lokalen Wärmebehandlungsprozess instantan zu regeln, wobei der Regelkreis einen induktiven Generator, ein Pyrometer und einen Regler umfasst und mittels des Pyrometers eine berührungslose Temperaturmessung erfolgt. Alternativ zum induktiven Generator kann die Wärmeeinbringung auch mittels eines Strahlverfahrens (Laser, Elektronenstrahl) erfolgen.

### Zeichnung

Ausführungsbeispiele der Erfindung sind in der Zeichnung vereinfacht dargestellt und in der nachfolgenden Beschreibung näher erläutert. Es zeigen:
- Figur 1: ein Brennstoffeinspritzventil gemäß dem Stand der Technik mit einem dreiteiligen inneren metallenen Ventilrohr als Gehäuse,
- Figur 2: ein erfindungsgemäßes Verbundbauteil bestehend aus drei Abschnitten,
- Figur 3: eine vereinfachte Anordnung zur Ausführung des Verfahrens,
- Figur 4: eine vereinfachte Messeinrichtung und
- Figur 5: einen schematischen Ausschnitt aus einem Einspritzventil mit einem erfindungsgemäß hergestellten Verbundbauteil zur Verdeutlichung einer Einsatzmöglichkeit.

### Beschreibung der Ausführungsbeispiele

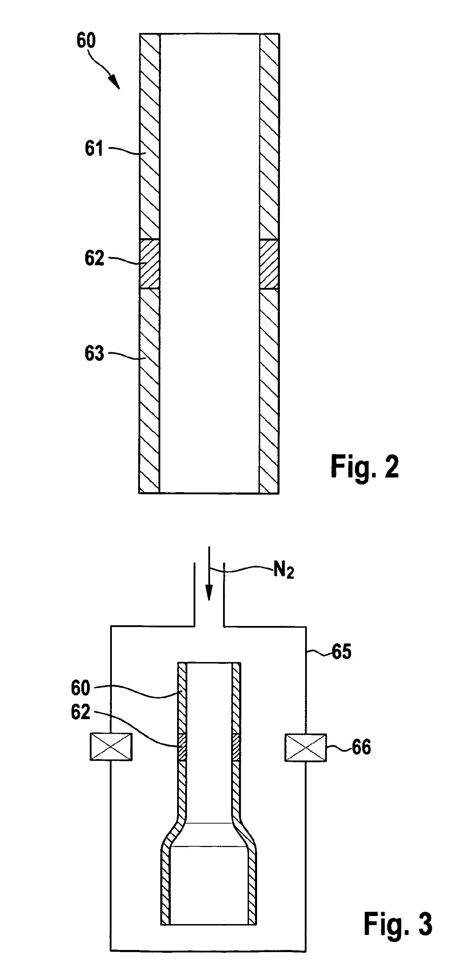

Bevor anhand der Figuren 2 und 5 die Charakteristik des erfindungsgemäß hergestellten metallischen Verbundbauteils 60 beschrieben wird, soll anhand von Figur 1 ein Brennstoffeinspritzventil des Standes der Technik als ein mögliches Einsatzprodukt für ein solches Verbundbauteil 60 näher erläutert werden.

Das in der Figur 1 beispielsweise dargestellte elektromagnetisch betätigbare Ventil in der Form eines Einspritzventils für Brennstoffeinspritzanlagen von gemischverdichtenden, fremdgezündeten Brennkraftmaschinen hat einen von einer Magnetspule 1 umgebenen, als Brennstoffeinlassstutzen und Innenpol dienenden rohrförmigen Kern 2, der beispielsweise über seine gesamte Länge einen konstanten Außendurchmesser aufweist. Ein in radialer Richtung gestufter Spulenkörper 3 nimmt eine Bewicklung der Magnetspule 1 auf und ermöglicht in Verbindung mit dem Kern 2 einen kompakten Aufbau des Einspritzventils im Bereich der Magnetspule 1.

Mit einem unteren Kernende 9 des Kerns 2 ist konzentrisch zu einer Ventillängsachse 10 dicht ein rohrförmiges metallenes nichtmagnetisches Zwischenteil 12 durch Schweißen verbunden und umgibt das Kernende 9 teilweise axial. Stromabwärts des Spulenkörpers 3 und des Zwischenteils 12 erstreckt sich ein rohrförmiger Ventilsitzträger 16, der fest mit dem Zwischenteil 12 verbunden ist. In dem Ventilsitzträger 16 ist eine axial bewegbare Ventilnadel 18 angeordnet. Am stromabwärtigen Ende 23 der Ventilnadel 18 ist ein kugelförmiger Ventilschließkörper 24 vorgesehen, an dessen Umfang beispielsweise fünf Abflachungen 25 zum Vorbeiströmen des Brennstoffs vorgesehen sind.

Die Betätigung des Einspritzventils erfolgt in bekannter Weise elektromagnetisch. Zur axialen Bewegung der Ventilnadel 18 und damit zum Öffnen entgegen der Federkraft einer Rückstellfeder 26 bzw. zum Schließen des Einspritzventils dient der elektromagnetische Kreis mit der Magnetspule 1, dem Kern 2 und einem Anker 27. Der rohrförmige Anker 27 ist mit einem dem Ventilschließkörper 24 abgewandten Ende der Ventilnadel 18 durch beispielsweise eine Schweißnaht fest verbunden und auf den Kern 2 ausgerichtet. In das stromabwärts liegende, dem Kern 2 abgewandte Ende des Ventilsitzträgers 16 ist ein zylinderförmiger Ventilsitzkörper 29, der einen festen Ventilsitz 30 aufweist, durch Schweißen dicht montiert.

Der kugelförmige Ventilschließkörper 24 der Ventilnadel 18 wirkt mit dem sich in Strömungsrichtung kegelstumpfförmig verjüngenden Ventilsitz 30 des Ventilsitzkörpers 29 zusammen. An seiner unteren Stirnseite ist der Ventilsitzkörper 29 mit einer beispielsweise topfförmig ausgebildeten Spritzlochscheibe 34 fest und dicht durch eine z. B. mittels eines Lasers ausgebildete Schweißnaht verbunden. In der Spritzlochscheibe 34 sind wenigstens eine, beispielsweise vier durch Erodieren oder Stanzen ausgeformte Abspritzöffnungen 39 vorgesehen.

Um den Magnetfluss zur optimalen Betätigung des Ankers 27 bei Bestromung der Magnetspule 1 und damit zum sicheren und genauen Öffnen und Schließen des Ventils zu dem Anker 27 zu leiten, ist die Magnetspule 1 von wenigstens einem, beispielsweise als Bügel ausgebildeten und als ferromagnetisches Element dienenden Leitelement 45 umgeben, das die Magnetspule 1 in Umfangsrichtung wenigstens teilweise umgibt sowie mit seinem einen Ende an dem Kern 2 und seinem anderen Ende an dem Ventilsitzträger 16 anliegt und mit diesen z. B. durch Schweißen, Löten bzw. Kleben verbindbar ist. Ein inneres metallenes Ventilrohr als Grundgerüst und damit auch Gehäuse des Brennstoffeinspritzventils bilden der Kern 2, das nichtmagnetische Zwischenteil 12 und der Ventilsitzträger 16, die fest miteinander verbunden sind und sich insgesamt über die gesamte Länge des Brennstoffeinspritzventils erstrecken. Alle weiteren Funktionsgruppen des Ventils sind innerhalb oder um das Ventilrohr herum angeordnet. Bei dieser Anordnung des Ventilrohrs handelt es sich um den klassischen dreiteiligen Aufbau eines Gehäuses für ein elektromagnetisch betätigbares Aggregat, wie ein Ventil, mit zwei ferromagnetischen bzw. magnetisierbaren Gehäusebereichen, die zur wirkungsvollen Leitung der Magnetkreislinien im Bereich des Ankers 27 mittels eines nichtmagnetischen Zwischenteils 12 magnetisch voneinander getrennt oder zumindest über eine magnetische Drosselstelle miteinander verbunden sind.

Das Einspritzventil ist weitgehend mit einer Kunststoffumspritzung 51 umschlossen, die sich vom Kern 2 ausgehend in axialer Richtung über die Magnetspule 1 und das wenigstens eine Leitelement 45 bis zum Ventilsitzträger 16 erstreckt, wobei das wenigstens eine Leitelement 45 vollständig axial und in Umfangsrichtung überdeckt ist. Zu dieser Kunststoffumspritzung 51 gehört beispielsweise ein mitangespritzter elektrischer Anschlussstecker 52.

Figur 2 zeigt ein erfindungsgemäß hergestelltes Verbundbauteil 60 bestehend aus drei Abschnitten 61, 62, 63. Wesentlich bei diesem Verbundbauteil 60 ist jedoch, dass mindestens ein gut magnetisierbarer Abschnitt 61 vorgesehen ist, an den sich unmittelbar einstückig ein zweiter Abschnitt 62 mit reduzierter Sättigungspolarisation Jₛ anschließt.

Als Ausgangsmaterial für das Verbundbauteil 60 wird ein semi-austenitischer nichtrostender Stahl (z.B. 1.4568 oder 15-8PH) verwendet. In einem erfindungsgemäßen Verfahren wird z.B. ein zylindrisches Rohteil aus besagtem Material bereitgestellt. Dieses Rohteil wird nachfolgend einerseits in einem mehrstufigen Umformprozess in eine gewünschte Form des Verbundbauteils 60 umgeformt und andererseits einem mehrstufigem Wärmebehandlungszyklus unterzogen. In idealer Weise werden sämtliche Wärmebehandlungsschritte und Tiefkühlvorgänge für das Rohteil in einer einzigen Wärmebehandlungsanlage vorgenommen.

Durch die gezielte Wärmebehandlung des Rohteils aus einem semi-austenitischen nichtrostenden Stahl kann dieser Werkstoff unterschiedliche Gefügezustände annehmen und die magnetischen Eigenschaften ändern, was für das herzustellende Verbundbauteil 60 ausgenutzt wird. Durch eine zweistufige Wärmebehandlung können diese Werkstoffe, die im geglühten Zustand nicht magnetisierbar sind, in besonderer Weise magnetisierbar gemacht werden. Der erste Wärmebehandlungsschritt ist eine Konditionierung, der zweite Wärmebehandlungsschritt wird als Aushärtung bezeichnet. Durch eine zwischengeschaltete Tiefkühlung und/oder eine abschließende Tiefkühlung kann der magnetisierbare Anteil weiter maximiert werden. Durch die optimierte Temperaturwahl beim Konditionieren und Aushärten sowie den oder die Tiefkühlvorgänge ist eine maximale Sättigungspolarisation Jₛ = 0,9....1,5 T erreichbar, da der Restaustenitanteil bestmöglich minimiert wird.

Nach dem letzten Umformprozess und/oder dem vorbeschriebenen Wärmebehandlungszyklus erfolgt eine Nachbehandlung unter Wärmeeinfluss in einem Teilbereich, um den Abschnitt 62 des herzustellenden Verbundbauteils 60 zu definieren. Die lokale Wärmebehandlung soll nur sehr eng begrenzt erfolgen, um die Magneteigenschaften nur in einem sehr exakt definierten Bereich zu ändern. Für die partielle Erwärmung des Verbundbauteils 60 eignet sich besonders eine induktive Wärmebehandlung (Induktionsglühen), denkbar sind aber auch Behandlungen mit Laserstrahl oder Elektronenstrahl.

Die enge lokale Begrenzung der Erwärmungszone kann in vorteilhafter Weise durch Wärmeabfuhr an den anderen Bauteilbereichen erreicht werden. Wie Figur 3 zu entnehmen ist kann die Wärmeabfuhr durch Konvektion mittels Gasanströmung (z.B. Stickstoffkühlung) oder mittels Umspülung mit einem Medium (z.B. Unterwasserhärten) erzwungen werden. Bei der Gasanströmung mittels Stickstoff wird das Verbundbauteil 60 beispielsweise in eine Bauteilaufnahme 65 in Form einer Glasglocke eingebracht. Durch die Bauteilaufnahme 65 wird ein Volumenstrom des Schutzgases geleitet, das Wärme unmittelbar vom Verbundbauteil 60 abführen kann, um sehr schmale Übergangsbereiche am Verbundbauteil 60 realisieren zu können. Das lokale Erwärmen erfolgt beim Induktionsglühen mit einer Induktionsspule 66. Der Erwärmungs- und Kühlprozess zeichnet sich dadurch aus, dass sich ein gewünschtes Magnetisierungsergebnis im wärmebehandelten Abschnitt 62 durch eine definierte Wärmebehandlung einstellen lässt. Die entscheidenden Prozessparameter sind dabei die Glühzeit und -temperatur, die im Wärmebehandlungsprozess instantan geregelt werden. In Figur 4 ist vereinfacht angedeutet, dass die Regelung z.B. mittels eines Pyrometers 67 zur berührungslosen Temperaturmessung (Messstrahl 68) erfolgt. Dabei umfasst der Regelkreis einen induktiven Generator, das Pyrometer 67 und einen Regler. Die Wärmebehandlung wird mindestens bei einer Temperatur von 700°C und über eine Zeitdauer von mindestens 2,5 s vorgenommen. Als Wärmesenken können am Verbundbauteil 60 zusätzlich oder alternativ auch Kühlringe angebracht werden. Außerdem kann auch die Spannaufnahme des Verbundbauteils 60 gekühlt werden.

Das Ergebnis der partiellen Wärmebehandlung zeichnet sich dadurch aus, dass die wärmebehandelte Zone (Abschnitt 62) eine definierte Länge von z.B. 1...10 mm besitzt, über die sie gleiche magnetische Eigenschaften aufweist, und der Übergangsbereich bzw. die Übergangsbereiche zwischen dem Abschnitt 62 und den magnetischen Abschnitten 61, 63 in ihrer Ausdehnung sehr gering (z.B. 1 mm) sind.

Die beschriebene abschließende lokale Wärmebehandlung wird in der Weise vollzogen, dass sich das Verbundbauteil 60 aus mindestens einem magnetischen Abschnitt 61 (Sättigungspolarisation Jₛ = 0,9....1,5 T) und mindestens einem nicht magnetisierbaren Abschnitt 62 (Sättigungspolarisation Jₛ = 0 T) zusammensetzt oder dass sich das Verbundbauteil 60 aus mindestens einem magnetischen Abschnitt 61 (Sättigungspolarisation Jₛ = 0,9....1,5 T) und mindestens einem Abschnitt 62 mit teilweise reduzierter Sättigungspolarisation (Sättigungspolarisation Jₛ = 0,01....0,3 T) zusammensetzt.

Figur 5 zeigt einen schematischen Ausschnitt aus einem Brennstoffeinspritzventil mit einem erfindungsgemäßen Verbundbauteil 60, das als dünnwandige Hülse im Ventil verbaut ist und dabei den Kern 2 und den Anker 27 radial und in Umfangsrichtung umgibt und dabei selbst von der Magnetspule 1 umgeben ist. Es wird deutlich, dass der mittlere Abschnitt 62 des Verbundbauteils 60 im axialen Erstreckungsbereich eines Arbeitsluftspaltes 70 zwischen dem Kern 2 und dem Anker 27 liegt, um die Magnetkreislinien optimal und effektiv im Magnetkreis zu leiten. Anstelle des in Figur 1 gezeigten bügelförmigen Leitelements 45 ist das äußere Magnetkreisbauteil z.B. als Magnettopf 46 ausgeführt, wobei der magnetische Kreis zwischen dem Magnettopf 46 und dem Gehäuse 66 über ein Deckelelement 47 geschlossen ist. Das metallische Verbundbauteil 60 ist nicht nur als Ventilhülse in einem elektromagnetischen Ventil einsetzbar, sondern z.B. auch als Kern 2.

Die Erfindung ist keinesfalls auf den Einsatz in Brennstoffeinspritzventilen oder Magnetventilen für Antiblockiersysteme beschränkt. Die erfindungsgemäß hergestellten Verbundbauteile 60 sind allgemein in Aggregaten einsetzbar, bei denen Zonen unterschiedlichen Magnetismus aufeinanderfolgend erforderlich sind. Das erfindungsgemäße Verbundbauteil 60 ist nicht nur mit zwei oder drei aufeinander folgenden Abschnitten herstellbar, sondern auch mit mehr als drei Abschnitten.

## Patentansprüche

1. Verfahren zur Herstellung eines metallischen Verbundbauteils, insbesondere für ein elektromagnetisches Ventil, wobei das Verbundbauteil (60) mit wenigstens zwei Abschnitten (61, 62, 63) unterschiedlicher Magnetisierung versehen ist, wobei die wenigstens zwei Abschnitte (61, 62, 63) an dem einstückigen Bauteil (60) unmittelbar aufeinanderfolgend liegen, und
das Ausgangsmaterial zum Herstellen des Verbundbauteils (60) ein semi-austenitischer Stahl ist, der als Rohteil bereitgestellt wird und das Rohteil nachfolgend in einem mehrstufigen Umform- und/oder Wärmebehandlungsprozess in eine gewünschte Form des Verbundbauteils (60) umgeformt und magnetisierbar gemacht wird, **dadurch gekennzeichnet, dass** die Wärmebehandlung in der Weise vorgenommen wird, dass das Bauteil eine Sättigungspolarisation Jₛ = 0,9....1,5 T aufweist, und abschließend in einem Teilbereich eine lokale Wärmebehandlung unter gleichzeitiger Kühlung der nicht in ihren Magneteigenschaften zu verändernden Bereiche des Verbundbauteils (60) erfolgt.

2. Verfahren zur Herstellung eines metallischen Verbundbauteils nach Anspruch 1, **dadurch gekennzeichnet, dass** die abschließende lokale Nachbehandlung unter Wärmeeinfluss als induktiver Glühvorgang vorgenommen wird.

3. Verfahren zur Herstellung eines metallischen Verbundbauteils nach Anspruch 1 oder 2, **dadurch gekennzeichnet, dass** während der lokalen Wärmebehandlung eine Wärmeabfuhr vom Verbundbauteil (60) durch Konvektion mittels Gasanströmung vorgenommen wird.

4. Verfahren zur Herstellung eines metallischen Verbundbauteils nach Anspruch 3, **dadurch gekennzeichnet, dass** das Verbundbauteil (60) in einer Bauteilaufnahme (65) von Stickstoff umströmt wird.

5. Verfahren zur Herstellung eines metallischen Verbundbauteils nach Anspruch 4, **dadurch gekennzeichnet, dass** die Bauteilaufnahme (65) in Form einer Glasglocke realisiert ist.

6. Verfahren zur Herstellung eines metallischen Verbundbauteils nach einem der vorhergehenden Ansprüche, **dadurch gekennzeichnet, dass** die Glühzeit und -temperatur im lokalen Wärmebehandlungsprozess instantan geregelt werden.

7. Verfahren zur Herstellung eines metallischen Verbundbauteils nach Anspruch 6, **dadurch gekennzeichnet, dass** die lokale Wärmebehandlung mindestens bei einer Temperatur von 700°C und über eine Zeitdauer von mindestens 2,5 s vorgenommen wird.

8. Verfahren zur Herstellung eines metallischen Verbundbauteils nach einem der vorhergehenden Ansprüche, **dadurch gekennzeichnet, dass** während der lokalen Wärmebehandlung eine berührungslose Temperaturmessung mittels eines Pyrometers (67) erfolgt.

9. Verfahren zur Herstellung eines metallischen Verbundbauteils nach Anspruch 3, **dadurch gekennzeichnet, dass** als Wärmesenken am Verbundbauteil (60) zusätzlich zur Gasanströmung oder alternativ Kühlringe angebracht sind und/oder die Spannaufnahme des Verbundbauteils (60) gekühlt wird.

10. Verfahren zur Herstellung eines metallischen Verbundbauteils nach einem der vorhergehenden Ansprüche, **dadurch gekennzeichnet, dass** die Abkühlung während der lokalen Wärmebehandlung derart erfolgt, dass der wenigstens eine Übergangsbereich zwischen dem wärmebehandelten Abschnitt (62) und dem benachbarten magnetischen Abschnitt (61, 63) in seiner Ausdehnung nur 1 mm beträgt.

11. Verfahren zur Herstellung eines metallischen Verbundbauteils nach einem der vorhergehenden Ansprüche, **dadurch gekennzeichnet, dass** das Verbundbauteil (60) derart ausgeformt wird, dass es hohlzylindrisch hülsenförmig vorliegt und als Ventilhülse oder Kern (2) einsetzbar ist.

## Claims

1. Method for producing a metallic composite component, in particular for an electromagnetic valve, wherein the composite component (60) is provided with at least two portions (61, 62, 63) of differing magnetization, wherein the at least two portions (61, 62, 63) lie in direct succession on the single-piece component (60), and the starting material for producing the composite component (60) is a semi-austenitic steel provided as a blank, and the blank is subsequently formed into a desired shape of the composite component (60) and made magnetizable in a multi-stage forming and/or heat treatment process, **characterized in that** the heat treatment is carried out in such a manner that the component has a saturation polarization Jₛ = 0.9....1.5 T, and finally local heat treatment is effected in a partial region while simultaneously cooling those regions of the composite component (60) which are not to be changed in terms of their magnetic properties.

2. Method for producing a metallic composite component according to Claim 1, **characterized in that** the final local aftertreatment under the influence of heat is carried out in the form of an inductive annealing operation.

3. Method for producing a metallic composite component according to Claim 1 or 2, **characterized in that** heat is dissipated from the composite component (60) by convection by means of gas inflow during the local heat treatment.

4. Method for producing a metallic composite component according to Claim 3, **characterized in that** nitrogen flows around the composite component (60) in a component holder (65).

5. Method for producing a metallic composite component according to Claim 4, **characterized in that** the component holder (65) is realized in the form of a glass bell jar.

6. Method for producing a metallic composite component according to one of the preceding claims, **characterized in that** the annealing time and temperature in the local heat treatment process are regulated instantaneously.

7. Method for producing a metallic composite component according to Claim 6, **characterized in that** the local heat treatment is carried out at least at a temperature of 700°C and for a duration of at least 2.5 s.

8. Method for producing a metallic composite component according to one of the preceding claims, **characterized in that** the temperature is measured contactlessly by means of a pyrometer (67) during the local heat treatment.

9. Method for producing a metallic composite component according to Claim 3, **characterized in that** cooling rings are mounted as heat sinks on the composite component (60) in addition to the gas inflow or as an alternative and/or the clamping holder of the composite component (60) is cooled.

10. Method for producing a metallic composite component according to one of the preceding claims, **characterized in that** the cooling during the local heat treatment is effected in such a manner that the extent of the at least one transition region between the heat-treated portion (62) and the adjacent magnetic portion (61, 63) is only 1 mm.

11. Method for producing a metallic composite component according to one of the preceding claims, **characterized in that** the composite component (60) is shaped in such a manner that it is present in the form of a hollow cylindrical sleeve and can be used as a valve sleeve or core (2).

## Revendications

1. Procédé de fabrication d'un composant composite métallique, notamment pour une soupape électromagnétique, dans lequel le composant composite (60) est pourvu d'au moins deux portions (61,62,63) à magnétisation différente, dans lequel les au moins deux portions (61,62,63) sont situées en succession immédiate sur le composant (60) en un seul tenant, et le matériau de départ pour fabriquer le composant composite (60) est un acier semi-austénitique, qui est fourni comme pièce brute, et la pièce brute est par la suite façonnée en une forme souhaitée du composant composite (60) dans le cadre d'un processus de façonnage et/ou de traitement thermique en plusieurs étapes et est rendue magnétisable, **caractérisé en ce que** le traitement thermique est entrepris de telle sorte que le composant présente une polarisation de saturation Jₛ=0,9...1,5 T, et finalement, dans une zone partielle, un traitement thermique local a lieu en refroidissant simultanément les zones du composant composite (60) dont les propriétés magnétiques ne doivent pas être modifiées.

2. Procédé de fabrication d'un composant composite métallique selon la revendication 1, **caractérisé en ce que** le traitement postérieur local final est entrepris sous influence thermique comme un procédé de recuit inductif.

3. Procédé de fabrication d'un composant composite métallique selon la revendication 1 ou 2, **caractérisé en ce que** pendant le traitement thermique local, une évacuation de chaleur du composant composite (60) est entreprise par convection au moyen d'une immersion dans du gaz.

4. Procédé de fabrication d'un composant composite métallique selon la revendication 3, **caractérisé en ce que** le composant composite (60) est baigné dans de l'azote dans un réceptacle de composant (65).

5. Procédé de fabrication d'un composant composite métallique selon la revendication 4, **caractérisé en ce que** le réceptacle de composant (65) est réalisé sous la forme d'une cloche de verre.

6. Procédé de fabrication d'un composant composite métallique selon une des revendications précédentes, **caractérisé en ce que** la durée et la température de recuit sont réglées de manière instantanée dans le cadre d'un processus de traitement thermique.

7. Procédé de fabrication d'un composant composite métallique selon la revendication 6, **caractérisé en ce que** le traitement thermique local est entrepris au moins à une température de 700°C et sur une durée d'au moins 2,5 s.

8. Procédé de fabrication d'un composant composite métallique selon une des revendications précédentes, **caractérisé en ce que** pendant le traitement thermique local, une mesure de température sans contact au moyen d'un pyromètre (67) a lieu.

9. Procédé de fabrication d'un composant composite métallique selon la revendication 3, **caractérisé en ce que** comme puits thermiques sur le composant composite (60) des bagues de refroidissement sont montées en complément de l'immersion dans du gaz ou en variante et/ou le support de serrage du composant composite (60) est refroidi.

10. Procédé de fabrication d'un composant composite métallique selon une des revendications précédentes, **caractérisé en ce que** le refroidissement a lieu pendant le traitement thermique local de telle sorte que l'au moins une zone de transition entre la portion traitée thermiquement (62) et la portion magnétique voisine (61,63) s'élève dans sa dilatation à seulement 1 mm.

11. Procédé de fabrication d'un composant composite métallique selon une des revendications précédentes, **caractérisé en ce que** le composant composite (60) est façonné de telle sorte qu'il se présente sous forme de manchon cylindrique creux et puisse être employé comme manchon de soupape ou coeur (2).
